# EUROPEAN PATENT SPECIFICATION

(11) **EP 1 485 646 B1**
(45) Date of publication and mention of the grant of the patent: **17.08.2005**
(21) Application number: 03711373.5
(22) Date of filing: 04.03.2003
(51) Int. Cl.: F16L 55/10, F16K 3/08, E03C 1/08

(54) **FLOW RESTRICTOR**
DURCHFLUSSBEGRENZER
LIMITEUR DE DEBIT

(30) Priority: 21.03.2002 EP 02252050
(43) Date of publication of application: 15.12.2004
(73) Proprietor: JohnsonDiversey, Inc., Sturtevant Wisconsin 53177 (US)
(72) Inventor: OLIVER, Stephen, JohnsonDiversey Equipment Ltd., Annesley, Nottinghamshire NG15 0DS (GB)
(74) Representative: Ruschke, Hans Edvard, Dipl.-Ing.
(86) International application number: PCT/US2003/006454
(87) International publication number: WO 2003/081116

(56) References cited:
- DE-A- 19 821 648

## Description

### Field of the Invention

This invention relates to the field of liquid flow rate regulation e.g. of the liquid in the supply line of a chemical diluting device, such as an eductor or the like.

### Background of the Invention

It is common practice in many industries, such as hotels and catering, for chemicals such as those used for cleaning to be purchased as concentrated liquids and then diluted with water to give the correct concentrations for use. Proportioning dispensing apparatus have been designed to achieve the desired dilution of the concentrated solution and dispense the mixed diluted solution.

These dispensers have commonly employed venturi-type devices, known as eductors, to aspirate or draw the concentrated solution into the water stream, see e.g. WO94/04857. In these eductors water travelling through a passage entrains the concentrated solution at a point where a restricted flow channel in the passage widens.

In order to ensure that the solution is dispensed at the desired concentration, a method of flow regulation is required to control the amount of concentrated solution drawn into the water flow. This has been achieved in previous eductors by means of an element having a small aperture or metering orifice in the concentrated solution feed line. This method of flow regulation has several disadvantages primarily due to the fact that it is difficult to change the flow rate of liquid to be diluted in the eductor. This is because it is difficult to remove and replace the component which carries the flow restricting channel with a flow restricting component for a different flow rate. This involves partially dismantling the eductor, which is an onerous task and can result in spillage of the solution being diluted, indeed the operator may become exposed to the potentially hazardous solution.

Components thus removed, to change the flow rate, can be easily damaged and may be incorrectly reinstalled in the eductor, which in turn leads to other problems.

US-A-2001 /0015231 describes a flow restrictor having a stack of rotatable disks which each have a tortuous channel on one face and an aperture for communication with the next disk. The alignment of the disks determines the length of the flow path and thus the flow rate.

Document DE-A-198 21 648 shows a liquid flow restrictor having a pair of rotatably mounted disks with a plurality of apertures which are selectively alignable to change the area of open through holes between the inlet of the flow restrictor and the outlet. The disks are mounted within the valve with their axis of rotation aligned with the axis of the valve. A seal around the edge of the disks prevents leakage, yet with the valve suitably slackened off, allows the disks to be rotated to change the through put ratio.

### Summary of the Invention

An object of the present invention is to create a liquid flow restrictor which permits an operator to easily and quickly select one of multiple differing flow restrictions corresponding to desired flow rates (e.g. dilutions) in a simple manner and with minimum safety risk to the operator.

According to the present invention, there is provided a liquid flow restrictor having a rotatably mounted member having opposite faces and a plurality of apertures providing different flow restriction zones between said faces, said zones being located in a circle around the axis of rotation of said member; and a pair of flow conduits sealingly engaging against said faces respectively; characterised in that the sealing engagement of the flow conduits against the faces of the rotatably mounted member is formed by a seal around a selected one of said restriction zones to provide respective flow restriction; whereby on rotation of said member different ones of said zones are brought into communication with said conduits to provide different respective flow restrictions.

According to a further aspect of the invention, an eductor for the dilution of a first liquid is provided, the eductor including a flow restrictor as described above.

Preferably the liquid flow restrictor includes a housing in which the member is rotatably mounted, and on which said flow conduits are mounted. One or both of the flow conduits is preferably releasably attachable to the housing, whereby the attachment causes the flow conduit to sealingly engage the member. Alternatively the conduits may be integral with the housing, and detachable connections provided for connection of flow lines.

The housing preferably has a cavity for receiving the member. At least one of the rotatable member and the housing is preferably resiliently deformable so as to permit insertion and retention of the member in its rotatably mounted position.

Each of the flow conduits preferably terminates in a resilient seal for sealing engagement with the member.

A portion of the rotatable member preferably protrudes from the housing making the member accessible to an operator so that he can manually rotate the member. The rotatable member is typically a disc, having the flow restriction zones spaced apart on a circle around the axis of rotation. Each zone may be one or more apertures.

Preferably at least one of the flow conduits is releasably engageable with the member to clamp against the member. The arrangement may be such that the clamping action hinders or blocks rotation of the member.

One or both of the conduits may be axially adjustable in the housing in its position relative to the respective face of the rotatable member, to vary the sealing pressure and/or break the sealing contact with the rotatable member. Thus one or both conduits may be retractable to reduce clamping pressure, to allow rotation of the disc. Such adjustability may be achieved by means of a bayonet-type or screw-thread connection of the conduit to the housing.

### Brief Description of the Drawings

An embodiment of the invention will now be described by way of example, with reference to the accompanying drawings.
Fig. 1 is a perspective view of a liquid flow restrictor embodying the invention with flow conduits attached;
Fig. 2 is a perspective view of a flow conduit of the device of Fig. 1, in which the end of the conduit is visible; and
Fig. 3 is an exploded perspective view of the liquid flow restrictor and flow conduits of Fig. 1.

### Description of the Preferred Embodiment

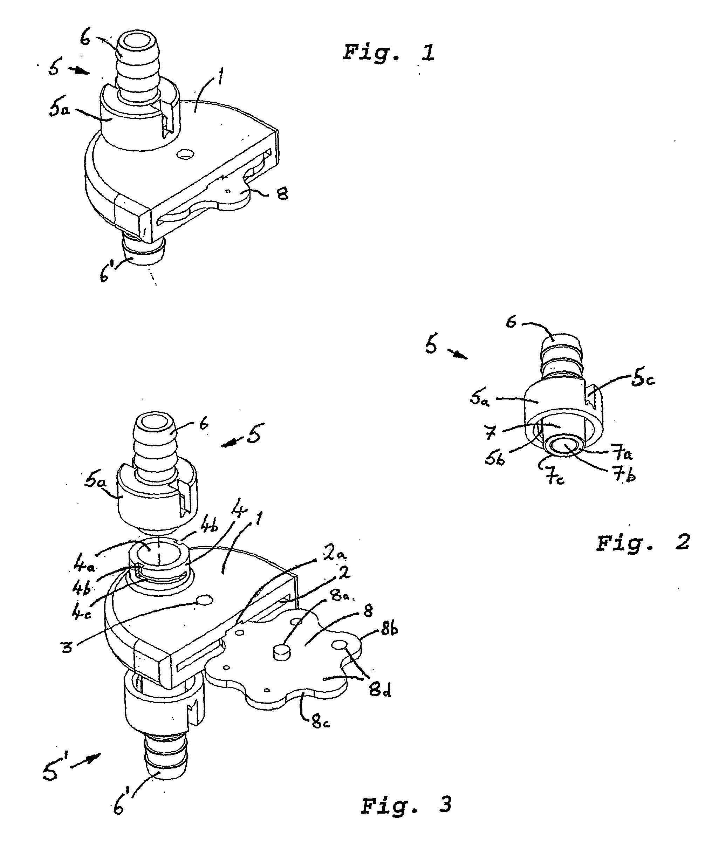

Figs. 1 to 3 show a liquid flow restrictor embodying the invention in the form of a housing 1, on either side of which is located an opening 4a (one visible only) of a housing connector 4. Respective ends 7 of a pair of identical flow conduits 5, 5' pass through the openings 4a, when the housing 1 and flow conduits 5, 5' are assembled. The flow conduits 5, 5' each have a central axial tube providing the flow path 7b and having an integral pipe connector 6, 6' for connecting the flow restrictor in the supply pipeline of a device being supplied, such as an eductor. Around the central tube is an integrally formed skirt portion 5a. The axes of the two openings 4a are aligned with one another and the openings 4a extend from outside the housing 1, through the housing wall and into a cavity 2 within the housing 1.

The cavity 2 of the housing has a substantially flat form and opens to one side of the housing, as can be seen in Figs. 1 and 2. The cavity 2 is sized for receiving and permitting rotation of a rotatably mounted flow-restricting member 8.

The rotatable member 8 takes the form of a generally disc-shaped plate of substantially uniform thickness with a stub axle 8a projecting from each face. The member 8 has a group of circumferentially equally spaced apart flow restriction zones in the form of apertures 8d extending between opposite faces of the member. The zones are located on a circle around the axis of rotation of the member 8. Alternatively the flow restriction zones may consist of clusters containing different numbers of apertures, so as to vary the cross-sectional area and therefore flow resistance. The edge of rotatable member 8 carries identification markings (not shown), which are therefore visible on the part of the member 8 which at any time projects from the housing 1 (see Fig. 1) and provide visual indication of the flow restriction being used, i.e. the aperture 8d which is aligned with the flow conduits 5, 5'.

The housing 1 includes two axle mounting holes 3 for retaining and rotationally mounting the two axles 8a of the rotatable member 8 within the cavity 2. The walls of the cavity 2 include guide slots 2a, along which the axles 8a slide during insertion of member 8 into the housing. The slots 2a are ramped i.e. their bases converge with distance from the open end of the cavity 2 and they extend as far as the axle mounting holes 3. The housing 1 is of a resiliently deformable material and is arranged to deform outwards as the member 8 is inserted, up to the point where axles 8a are aligned with respective axle mounting holes 3. In this position, the axles 8a enter the holes 3 as the housing resiliently returns to its original shape, thus locking the rotatably mounted member 8 in its normal operating position, as illustrated in Fig. 1. This snap-action fit provides simple and accurate assembly.

A part of the member 8 protrudes, in normal operation, from an edge of the cavity (as shown in Fig. 1) so as to be accessible to an operator, who is able to rotate the member by applying an external force.

Each of the parts of the restrictor, apart from the O-ring seals if separately provided, is a one-piece molding of plastics material.

Fig. 1 shows the rotatably mounted member 8 in its normal operating position within the housing. Fig. 3 shows the member 8 just prior to its insertion into the cavity 2 of the housing. The member 8, in use, occupies the cavity 2 and a peripheral region of the member 8 lies in the gap between the openings 4a, so that liquid restrictions 8d are selectively alignable, through rotation of the member 8, with the ends 7 of the flow conduits 5, 5'.

The openings 4a of the housing are sized to receive the ends 7 of the respective flow conduits 5, 5', thus enabling the ends 7 to come into a position of sealing engagement with the respective faces of the rotatably mounted member 8. The end 7 of each conduit 5, 5' carries an annular resilient seal 7a, e.g. a molded seal, molded as part of the end of conduit 5, 5'. Alternatively, the seal can be in the form of an O-ring, held in an annular groove in the axial end face of the conduit or in a recess around the outside end of the conduit (i.e. a step reduction in diameter at the end), the O-ring projecting axially beyond said end.

The housing connectors 4 are generally in the form of a collar, each including coupling arrangements in the form of a pair of slots 4b, 4c, cut in the outside surface of the housing connector 4. The slot 4b, 4c is a "bayonet" type attachment. The slot comprises an axial slot portion 4b and a ramped slot portion 4c which extends both circumferentially and axially towards the cavity in the housing. The pair of slots 4b, 4c are arranged to receive a corresponding pair of inwardly projecting mating lugs 5b (Fig. 2) on the skirt portion 5a of the flow conduit 5, 5'. Slot 4c permits the flow conduit 5, 5' to be adjustable relative to member 8 such that the conduit 5, 5' remains in sealing engagement with the member 8 whilst permitting rotation of the member (i.e. to select a different flow restriction 8d). As an alternative to the bayonet type arrangement, a threaded connection may be used.

The skirt portion 5a of each flow conduit 5, 5' and the respective connector 4 are coupled by being pushed together and then rotated relative to one another so that the lugs 5b engage and travel along the slots 4b, 4c. During coupling, the end 7 of flow conduit 5, 5', more particularly the seal 7a on the end 7 of flow conduit 5, 5', is displaced towards and into engagement with the face of rotatable member 8. Coupling can in practice be carried out with the help of a tool inserted into a pair of slots 5c on the flow conduit connector 5a.

The operator manually aligns, by rotating member 8, the desired flow restriction 8d with the flow conduits 5, 5'. The coupling of flow conduits 5, 5' to the respective housing connectors 4 causes the seals 7a at the ends 7 of flow conduits 5, 5' to sealingly engage the member around the desired flow restriction zone (aperture 8d).

The skirt portion 5a and housing connector 4 are so arranged that coupling causes the seal 7a of end 7 to bear against the member 8 with sufficient clamping force to both seal the seal 7a against member 8 and at the same time block rotation of the member. Here, sufficient frictional engagement between the seal 7a and the member 8 occurs to lock the connector 5a in its final position relative to the housing connector (i.e. with lugs 5b at the ends of slots 4c).

Thus, once a desired flow restriction 8d has been selected and at least one of the flow conduit connectors has been fully inserted and coupled it is not possible or at least very difficult to change the flow restriction by rotating member 8. To change the flow restriction, the clamping force of the conduits 5, 5' is sufficiently released to allow the member 8 to be rotated. The conduit 5, 5' need not be fully removed, only backed off, with the seal 7 still sealing against the face of the member 8 as it is rotated.

Alternatively, the seal 7a may contact the member 8 with sufficient force to provide a sufficient seal between the selected aperture 8d and the flow conduit 5, 5' without tightly clamping the member 8, which may be rotated while maintaining sliding contact with the seal 7a. In this case, further means for blocking rotation of the member may be provided, if required.

The illustrated embodiment is connectable to two flow pipes by the connectors 6, 6'. Alternatively, the housing 1 is assembled to or integrally formed with the body of the device, i.e. the eductor, in whose supply line the liquid flow restrictor is installed (not shown). In this case for example, the rotatable member projects from the eductor body itself, and only one housing connector 4 is accessible from the outside of the device. This arrangement obviates the need for the second housing connector for releasably attaching a flow conduit, as this flow conduit is replaced by a flow path within the eductor housing. Sealing of the flow path within the device against a face of the rotatable member 8 can be by clamping by the use of an O-ring arrangement as described above.

There is thus provided by the illustrated device a flow restrictor composed of conveniently few parts, providing a high level of safety by permitting change of dilution with little risk of exposure to the liquid in the flow pipes, while allowing easy and quick change of flow range.

## Claims

1. A liquid flow restrictor having:
a rotatably mounted member (8) having opposite faces and a plurality of apertures (8d) providing different flow restriction zones between said faces, said zones being located in a circle around the axis of rotation of said member; and
a pair of flow conduits (5, 5') sealingly engaging against said faces respectively;
**characterised in that** the sealing engagement of the flow conduits (5,5') against the faces of the rotatably mounted member is formed by a seal around a selected one of said restriction zones to provide respective flow restriction;
whereby on rotation of said member (8) different ones of said zones are brought into communication with said conduits (5, 5') to provide different respective flow restrictions.

2. A liquid flow restrictor according to claim 1, including a housing (1) in which the member (8) is rotatably mounted, and on which said flow conduits (5, 5') are mounted.

3. A liquid flow restrictor according to claim 2, wherein a portion of the member (8) protrudes from the housing (1) whereby manual force can be applied to rotate the member (8).

4. A liquid flow restrictor according to claim 2 or 3, wherein the housing (1) has a cavity (2) for receiving the member (8), at least one of the member (8) and said housing (1) being resiliently deformable so as to permit insertion and retention of the member (8) in its rotatably mounted position.

5. A liquid flow restrictor according to any preceding claim, wherein each of the flow conduits (5, 5') terminates in a resilient seal (7a) for sealing engagement with the member (8).

6. A liquid flow restrictor according to any one of the preceding claims, wherein at least one of the flow conduits (5, 5') is releasably engageable with the member (8) to clamp and therefore hinder rotation of the member.

7. A liquid flow restrictor according to any one of the preceding claims, wherein at least one of the flow conduits (5, 5') is adjustable relative to the member (8) to reduce the sealing force, thereby to permit rotation of the member (8).

8. A liquid flow restrictor according to any one of the preceding claims, wherein at least one of the flow conduits (5, 5') is releasably attachable to the housing (1), so that when attached to the housing, the flow conduit (5) sealingly engages the member (8).

9. An eductor for the dilution of a first liquid into a further liquid, including the flow restrictor of any preceding claim for selectively restricting the flow of said first liquid.

## Patentansprüche

1. Flüssigkeits-Durchflussbegrenzer mit:
einem drehbar angebrachten Element (8), das gegenüberliegende Außenflächen und eine Vielzahl von Öffnungen (8d) aufweist, die unterschiedliche Durchflussbegrenzungszonen zwischen diesen Außenflächen vorsehen, wobei diese Außenflächen kreisförmig um die Rotationsachse dieses Elements angeordnet sind; und
einem Paar von Durchflusszuleitungen (5, 5'), die mit der jeweiligen Außenfläche abdichtend im Eingriff stehen;
**dadurch gekennzeichnet, dass** die Abdichtung der Durchflusszuleitungen (5, 5') gegen die Außenflächen des drehbar angebrachten Elements durch eine Dichtung um eine ausgewählte Begrenzungszone realisiert wird, um eine entsprechende Durchflussbegrenzung zu ermöglichen;
wodurch bei Drehung des Elements (8) verschiedene dieser Zonen mit den Durchflusszuleitungen (5, 5') in Verbindung treten, um jeweils unterschiedliche Durchflussbegrenzungen vorzusehen.

2. Durchflussbegrenzer nach Anspruch 1, mit einem Gehäuse (1), in dem das Element (8) drehbar gelagert ist und an dem die Durchflusszuleitungen (5, 5') befestigt sind.

3. Durchflussbegrenzer nach Anspruch 2, bei dem ein Teil des Elements (8) aus dem Gehäuse (1) hervorsteht, wodurch das Element (8) mit der Hand gedreht werden kann.

4. Durchflussbegrenzer nach Anspruch 2 oder 3, bei dem das Gehäuse (1) eine Ausnehmung (2) zum Aufnehmen des Elements (8) hat, wobei wenigstens das Element (8) oder das Gehäuse (1) elastisch verformbar ist, um das Element (8) einführen und in der drehbar gelagerten Position halten zu können.

5. Durchflussbegrenzer nach irgendeinem vorangehenden Anspruch, bei dem jede Durchflusszuleitung (5, 5') am Ende einen elastischen Dichtungsring zum Abdichten mit dem Element (8) hat.

6. Durchflussbegrenzer nach irgendeinem vorangehenden Anspruch, bei dem mindestens eine der Durchflusszuleitungen (5, 5') lösbar mit dem Element (8) im Eingriff steht, um es festzuklemmen und somit eine Rotation des Elements zu unterbinden.

7. Durchflussbegrenzer nach irgendeinem vorangehenden Anspruch, bei dem mindestens eine der Durchflusszuleitungen (5, 5') relativ zum Element (8) verschiebbar ist, um die abdichtende Vorspannung zu reduzieren, damit sich das Element (8) drehen lässt.

8. Durchflussbegrenzer nach irgendeinem vorangehenden Anspruch, bei dem mindestens eine der Durchflusszuleitungen (5, 5') abnehmbar an dem Gehäuse (1) anbringbar ist, sodass die Durchflusszuleitung (5) - falls am Gehäuse befestigt - mit dem Element (8) abdichtend im Eingriff steht.

9. Mischdüse zum Verdünnen einer ersten Flüssigkeit mit einer weiteren Flüssigkeit, mit einem Durchflussbegrenzer nach irgendeinem vorangehenden Anspruch zum wahlweisen Begrenzen der Strömung der ersten Flüssigkeit.

## Revendications

1. Limiteur de débit comprenant :
un élément monté à rotation (8) ayant des faces opposées et une pluralité d'ouvertures (8d) fournissant des zones de rétrécissement différentes entre lesdites faces, lesdites zones étant situées dans un cercle autour de l'axe de rotation dudit élément ; et
une paire de conduits d'écoulement (5, 5') en prise étanche contre lesdites faces respectivement ;
**caractérisé en ce que** la prise étanche des conduits d'écoulement (5, 5') contre les faces de l'élément monté à rotation est formée par un joint autour d'une desdites zones de rétrécissement sélectionnée pour fournir la limitation de débit respective ;
moyennant quoi lors de la rotation dudit élément (8) différentes desdites zones sont amenées en communication avec lesdits conduits (5, 5') pour fournir différents débits respectifs.

2. Limiteur de débit selon la revendication 1, comprenant un logement (1) dans lequel l'élément (8) est monté à rotation, et sur lequel lesdits conduits d'écoulement (5, 5') sont montés.

3. Limiteur de débit selon la revendication 2, dans lequel une partie de l'élément (8) fait saillie depuis le logement (1) moyennant quoi une force manuelle peut être appliquée pour faire tourner l'élément (8).

4. Limiteur de débit selon la revendication 2 ou 3, dans lequel le logement (1) comporte une cavité (2) pour recevoir l'élément (8), au moins l'un de l'élément (8) et dudit logement (1) étant élastiquement déformable de façon à permettre l'insertion et la retenue de l'élément (8) dans sa position montée à rotation.

5. Limiteur de débit selon l'une quelconque des revendications précédentes, dans lequel chacun des conduits d'écoulement (5, 5') se termine par un joint élastique (7a) pour une prise étanche avec l'élément (8).

6. Limiteur de débit selon l'une quelconque des revendications précédentes, dans lequel au moins l'un des conduits d'écoulement (5, 5') peut venir en prise de manière amovible avec l'élément (8) pour pincer et donc empêcher la rotation de l'élément.

7. Limiteur de débit selon l'une quelconque des revendications précédentes, dans lequel au moins l'un des conduits d'écoulement (5, 5') peut être réglé par rapport à l'élément (8) pour réduire la force d'étanchéité, permettant ainsi la rotation de l'élément (8).

8. Limiteur de débit selon l'une quelconque des revendications précédentes, dans lequel au moins l'un des conduits d'écoulement (5, 5') peut être fixé de manière amovible au logement (1), de telle manière que quand il est fixé au logement , le conduit d'écoulement (5) vient en prise étanche avec l'élément (8).

9. Ejecteur pour la dilution d'un premier liquide dans un autre liquide, comprenant le limiteur de débit selon l'une quelconque des revendications précédentes pour limiter sélectivement le débit dudit premier liquide.
